# EUROPÄISCHE PATENTSCHRIFT

(11) **EP 1 225 032 B1**
(45) Veröffentlichungstag und Bekanntmachung des Hinweises auf die Patenterteilung: **05.04.2006**
(21) Anmeldenummer: 02000126.9
(22) Anmeldetag: 04.01.2002
(51) Int. Cl.: B32B 3/10, B32B 3/26, B32B 3/30

(54) **Eigenspannungsarmes Verbundbauteil**
Low-Residual-Stress laminate
Stratifié à faible contrainte interne

(30) Priorität: 17.01.2001 DE 10101772
(43) Veröffentlichungstag der Anmeldung: 24.07.2002
(73) Patentinhaber: Bayer MaterialScience AG, 51368 Leverkusen (DE)
(72) Erfinder: Wagenblast, Joachim, Dr., 134-136 Kennedy Road, Hong Kong (CN); Goldbach, Hubert, 40882 Ratingen (DE)

(56) Entgegenhaltungen:
- EP-A- 1 084 816
- WO-A-00/76816

## Beschreibung

Die Erfindung betrifft ein eigenspannungsarmes Verbundbauteil, das wenigstens aufgebaut ist aus einem Grundkörper bestehend aus einem hochfesten Werkstoff und einem an den Grundkörper angeformten Kunststoffteil aus thermoplastischem Kunststoff, wobei der Grundkörper an diskreten Verbindungsstellen mit dem Kunststoffteil verbunden ist. Mit einer speziellen Gestaltung werden Spannungen durch z.B. unterschiedliche Wärmeausdehnung der Materialien von Grundkörper und Kunststoffteil verhindert.

Das Verbundteil besteht aus Komponenten unterschiedlicher Werkstoffe unter Verwendung von formschlüssigen Verbindungselementen, wobei der Formschluss eine Relativbewegung der unterschiedlichen Komponenten mit mindestens einem Freiheitsgrad erlaubt.

Die Erfindung betrifft insbesondere Kunststoff-Metall-Hybridbauteile mit formschlüssigen Verbindungselementen, die den Aufbau von Eigenspannungen im Bauteil, resultierend aus unterschiedlichen Wärmedehnungen der verschiedenen Materialien, verhindern.

Bei dem Verbundbauteil handelt es sich um Hybridbauteile, die aus mehreren Komponenten unterschiedlicher Werkstoffe wie z.B. Kunststoff und Metall zusammengesetzt sind. Die Verbindung der verschiedenen Komponenten erfolgt mit Hilfe bestimmter Elemente, die bezogen auf maximal zwei Raumrichtungen als Formschlüsse ausgeführt sind.

In der Praxis findet man Kunststoff/Metall-Verbundbauteile, bei denen Metallbleche durch Rippenstrukturen aus Thermoplasten z.B. Polyamid gestützt werden (vergleiche z.B. EP 370 342 A2, EP 995 668 A2). Die Rippenstruktur wird dabei formschlüssig in allen drei Raumrichtungen fest an das Metallblech angebunden.

Diese in der Praxis üblichen Verbundbauteile haben den Nachteil, dass sie aufgrund ihrer Herstellung mittels Spritzgießen einen hohen Eigenspannungszustand aufweisen. Die thermoplastische Komponente wird hierbei als Schmelze auf das Metallblech als Grundkörper aufgespritzt und anschließend abgekühlt. Durch die starke Schwindung des Thermoplasten während des Abkühlvorganges werden im Bauteil Spannungen induziert, die sich nur teilweise über Relaxationsvorgänge in der thermoplastischen Komponente abbauen. Die unterschiedlichen Wärmeausdehnungen der verschiedenen Bauteilkomponenten können diese Spannungen während des Gebrauchs noch verstärken. Aus diesem Grund werden für diese Art von Verbundbauteilen nur teilkristalline Thermoplaste eingesetzt. Bisher sind sogar nur Anwendungen mit Polyamid bekannt. Bei diesem Thermoplasten wirkt eine natürliche relativ starke Feuchtigkeitsaufnahme, die einhergeht mit einer Expansion des Materials, spannungsabbauend. Amorphe Thermoplaste sind dagegen für solche Verbundkonstruktionen ungeeignet, da sie durch Spannungsrisskorrosion versagen.

Der Erfindung liegt daher die Aufgabe zugrunde, Verbundbauteile der eingangs erwähnten Art zu schaffen, die durch Relativbewegungen zwischen den Komponenten Grundkörper und Kunststoffteil den Aufbau von Eigenspannungen verhindern.

Diese Aufgabe wird erfindungsgemäB dadurch gelöst, dass ein Bauteil mit formschlüssigen Verbindungselementen geschaffen wird, bei denen in wenigstens einer Richtung der Formschluss aufgehoben und durch einen Kraftschluss ersetzt ist.

Gegenstand der Erfindung ist ein Verbundbauteil wenigstens aufgebaut aus einem Grundkörper bestehend aus einem hochfesten Werkstoff, insbesondere aus Metall oder einem faserverstärkten Thermoplasten oder einem Duromeren, insbesondere bevorzugt aus Metall, und einem an den Grundkörper angeformten Kunststoffteil aus thermoplastischem Kunststoff, wobei der Grundkörper an diskreten Verbindungsstellen, insbesondere in Form von Durchbrüchen, Ausnehmungen, Senken oder Noppen, mit dem Kunststoffteil verbunden ist, dadurch gekennzeichnet, dass an ausgewählten Durchbrüchen das Kunststoffteil durch die Durchbrüche hindurchtritt, dass das Kunststoffteil im Bereich der Durchbrüche senkrecht zur Ebene des Grundkörpers einen Formschluss mit dem Grundkörper bildet, und dass das Kunststoffteil in wenigstens einer Richtung x oder y in der Ebene des Grundkörpers eine kraftschlüssige Verbindung zum Grundkörper aufweist, die eine Relativbewegung zwischen Grundkörper und Kunststoffteil entlang der Richtungen x und/oder y zulässt.

Bevorzugt werden die Durchbrüche als Langlöcher ausgebildet mit einer Hauptausdehnung der Längsachse des Langloches.

In einer besonders bevorzugten Ausführung weisen die Durchbrüche in der Ebene des Grundkörpers einen größeren Durchmesser in beiden Richtungen x und y auf als der jeweilige Kunststoffzapfen des Kunststoffteils, der durch einen Durchbruch hindurchtritt.

Das Kunststoffteil bildet in einer bevorzugten Variante eine Rippenstruktur, wobei die Verbindungsstellen des Kunststoffteils überwiegend an den Kreuzungsstellen der Rippen angeordnet sind.

Weiterer Gegenstand der Erfindung ist die Verwendung des erfindungsgemäßen Verbundbauteiles als Konstruktionselement für Maschinen und Fahrzeuge, insbesondere Kraftfahrzeuge, für Elektronikartikel, Haushaltsartikel oder Baubedarf.

Die hochfesten Werkstoffe für den Grundkörper können Stahl, Aluminium, Magnesium, Keramik, Duromere oder Composites sein.

Die Thermoplastkomponente kann aus einem unverstärkten oder verstärkten oder gefüllten Kunststoff, ausgewählt aus der Reihe: Polyamid, Polyester, Polyolefin, Styrolcopolymerisat, Polycarbonat, Polyphenylenoxid, Polyphenylensulfid, Polyimid, Polyvinylchlorid, Polyurethan, PSO oder PEEK oder möglichen Mischungen der Polymere.

Die Grundkörper und Kunststoffe können in Form von Blechen, Tafeln, Platten, Profilen (offene und geschlossen Profile) Hohlkammern vorliegen. Werkstoffart, Anzahl und Form der Komponenten kann variiert werden. In einer bevorzugten Ausfiihrung werden flächige Teile bzw. Komponenten wie z.B. Metallbleche mit einer Rippenstruktur oder einer Deckschicht aus Kunststoff versehen. Hierzu werden an die Thermoplastkomponente Nietköpfe angeformt, die senkrecht zu der oder den Hauptausdehnungsrichtungen der Kunststoffkomponente (bei flächigen Bauteilen Ausdehnungsrichtungen in der Flächenebene) eine formschlüssige und parallel zu der oder den Hauptausdehnungsrichtungen eine kraftschlüssige Verbindung zur hochfesten Komponente ermöglichen. Dabei ist entscheidend ob es sich um stabförmige oder flächige Bauteile handelt. Stabförmige Bauteile werden sich überwiegend nur in Längsrichtung ausdehnen, während bei flächigen Bauteilen in den Eckbereichen zwei Ausdehnungsrichtungen zu berücksichtigen sind.

Auf diese Weise können auch mehrere Grundkörper direkt miteinander verbunden werden. Dabei kann die Funktion des Kunststoffes auf das Zusammenhalten der Grundkörper in Form von Nietköpfen beschränkt sein. Die Grundkörper können dabei auch in der oder den Hauptausdehnungsrichtungen der thermoplastischen Kunststoffkomponente formschlüssig verbunden sein. Durch die Formschlüsse können Kräfte direkt von einem Grundkörper zu anderen übertragen werden. Die Kunststoffniete halten die Verbundkörper lediglich zusammen und sichern den Werkstoffverbund. Sie sind in den Hauptausdehnungsrichtungen kraftschlüssig und senkrecht zu der oder den Ausdehnungsrichtungen formschlüssig ausgeführt.

Weiterhin besteht die Möglichkeit ein Bauteil zu schaffen das aus mehreren direkt miteinander verbundenen hochfesten Komponenten besteht, die ebenfalls mittels Kunststoffniete gesichert werden, wobei die Kunststoffkomponente aber auch z.B. in Form einer angeformten Platte andere Aufgaben übernimmt.

Die Herstellung des Verbundbauteils kann auf unterschiedliche Weise erfolgen. Dabei unterscheidet sich überwiegend das Verfahren, mit welchem die Verbindung von Thermoplast- und hochfester Komponente erzielt wird:

### 1. Verbindung durch Spritzgießen

Bei diesem Herstellungsverfahren ist der Grundkörper mit Durchbrüchen versehen (z.B. Metallblech mit Aussparungen), durch die ein formschlüssiger Verbund mit dem Kunststoffteil senkrecht zu den Hauptausdehnungsrichtungen realisiert wird.

Bei der Verbindung durch Spritzgießen wird zunächst z.B. ein Metallblech in ein Spritzgießwerkzeug eingelegt. Danach wird das Spritzgießwerkzeug geschlossen und der Kunststoff eingespritzt. Da das Kunststoffmaterial in flüssiger Form in das Spritzgießwerkzeug gefüllt wird, kann es die Durchbrüche im Metallblech durchströmen und auf der Rückseite einen Nietkopf bilden. Um zu verhindern, dass sich der Formschluss auch in der oder den Hauptausdehnungsrichtungen der Kunststoffkomponente ausbildet, wird das Spritzgießwerkzeug mit Kernen versehen. Diese Kerne werden so angeordnet, dass innerhalb der Aussparungen der Bleche zwischen Blech und Niet Ausnehmungen geschaffen werden, die in der oder den Hauptausdehnungsrichtungen eine Relativbewegung zwischen Kunststoffteil und Blech erlauben.

Als Beispiel sei hier ein Verbindungselement genannt, dass eine Relativbewegung in einer Richtung zulässt. Dabei ist es zunächst erforderlich, dass das Blech mit einem Langloch versehen wird. Im Spritzgießprozess werden dann die Räume auf der linken und rechten Seite des Langloches durch Kerne ausgefüllt, so dass sich lediglich in der Mitte des Langloches ein Zapfen als Bestandteil des Kunststoffniets ausbilden kann. Dieser Zapfen kann dann bei Relativbewegungen zwischen Blech- und Kunststoffkomponente bis zum linken und rechten Rand des Langloches verschoben werden.

Durch Spritzgießen können auch verschiedene Teile aus Metall oder Compositewerkstoffen in einem Verfahrensschritt direkt oder indirekt über Bereiche aus Thermoplast verbunden werden. Darüber hinaus kann durch den Spritzgießprozess sowohl eine Thermoplastkomponente des herzustellenden Hybridbauteils, in Form von z.B. eine Platte, geformt als auch die Verbindung zum Metallblech erreicht werden.

### 2. Verbindung durch Kunststoffnieten

In ähnlicher Weise kann auch bei Anwendung des Kunststoffnietens eine Anbindung der Thermoplastkomponente an die hochfeste Komponente erzielt werden. Dabei wird zunächst die Thermoplastkomponente separat ohne Metallblech, aber mit angeformten Verbindungszapfen, gespritzt. Anschließend werden das oder die Metallbleche auf das Kunststoffteil gelegt wobei die Verbindungszapfen durch die Durchbrüche des oder der Metallbleche ragen. Die Durchbrüche werden derart gestaltet, dass die Nietzapfen Raum für Bewegungen in den erforderlichen Richtungen haben. Danach werden die Verbindungszapfen mit Hilfe eines Umformprozesses (z.B. Ultraschallschweißen) zu einem Nietkopf umgeformt. Darüber hinaus kann die Schweißverbindung unter Verwendung von separaten Zusatzelementen (z.B. Zapfenschweißen) durch Reib- oder ebenfalls durch Ultraschallschweißen oder durch das Fügen zweier thermoplastischen Komponenten (Platten, Profile, etc.) mit angeformten Verbindungselementen erreicht werden.

### 3. Formschlüssige Verbindung der Thermoplastkomponente mit hochfester Komponente durch Stecken, Schnappen oder Schrauben

Bei diesem Verfahren wird zunächst ein Kunststoffteil hergestellt, das mit den erforderlichen Steck-, Schnapp- bzw. Schraubelementen ausgestattet ist. Hierzu kann z.B. eine spritzgegossenes Kunststoffteil mit angeformten Zapfen oder Schraubendomen verwendet werden, die in freigesparte Durchbrüche (Langloch oder quadratische-Aussparungen) der hochfesten Komponente gesteckt werden. Danach wird das dazu passende Gegenstück eingeschnappt oder geschraubt und die Verbindung hergestellt.

### 4. Kombinationen unterschiedlicher Verfahren zum Verbinden der Außenteile

Weitere Möglichkeiten zum Verbinden der Komponenten bestehen bei Verwendung unterschiedlicher Kombinationen von Verfahren. Demnach besteht auch die Möglichkeit Formschlüsse zwischen den hochfesten Komponenten (z.B. Bleche) zu realisieren, indem deckungsgleiche Sicken in beiden Teilen angebracht werden. Über zusätzliche deckungsgleiche freigesparte Durchbrüche werden Nietverbindungen zwischen Kunststoffkomponente und Metallblechen eingesetzt. Dadurch erhält man in den Hauptausdehnungsrichtungen eine formschlüssige Verbindung der Bleche sowie eine kraftschlüssige Verbindung zwischen den Blechen und der Kunststoffkomponente.

Bei allen Verbindungsverfahren können auch mehrere hochfeste Komponenten (z.B. Bleche) miteinander verbunden werden.

Die mit der Erfindung erzielten Vorteile können wie folgt zusammengefasst werden:
- Verbundbauteile aus Materialien mit unterschiedlichen Werkstoffverhalten, insbesondere mit unterschiedlichen Wärmeausdehnungen, in eigenspannungsfreiem Zustand.
- Möglichkeit zum Einsatz von spannungsrissempfindlichen amorphen Kunststoffen für großflächige Kunststoff/Metall-Verbundbauteile
- Kosten- und gewichtsoptimierte Gestaltung von Verbundbauteilen durch Einsatz von kostengünstigen Kunststoffen mit geringer Dichte
- Freie Wahl des Fügeverfahrens zur Verbindung mit anderen Bauteilen
- Möglichkeit zur Herstellung eines Flächenverbundes aus verschiedenen Werkstoffen in einem Verfahrensschritt

Die Erfindung wird nachstehend anhand von Figuren näher erläutert, ohne dass dadurch die Erfindung im Einzelnen eingeschränkt wird.

Es zeigen
Fig. 1 ein erfindungsgemäßes Verbundbauteil in der Aufsicht
Fig. 2 den Querschnitt durch das Teil nach Fig. 1 gemäß Linie A-A
Fig. 3 den Querschnitt durch die Platte nach Fig. 1 gemäß Linie B-B
Fig. 4 ein Verbundbauteil mit Nietzapfen in der Aufsicht
Fig. 5 die Platte nach Fig. 4 im Querschnitt
Fig. 6 die Platte nach Fig. 5 von unten gesehen
Fig. 7 ein erfindungsgemäßes Bauteil mit Rippenstruktur im Kunststoffteil
Fig. 8 die Aufsicht auf das Bauteil nach Fig. 7
Fig. 9 eine Spritzwand für ein Kraftfahrzeug als Beispiel für ein Verbundteil

### Beispiele

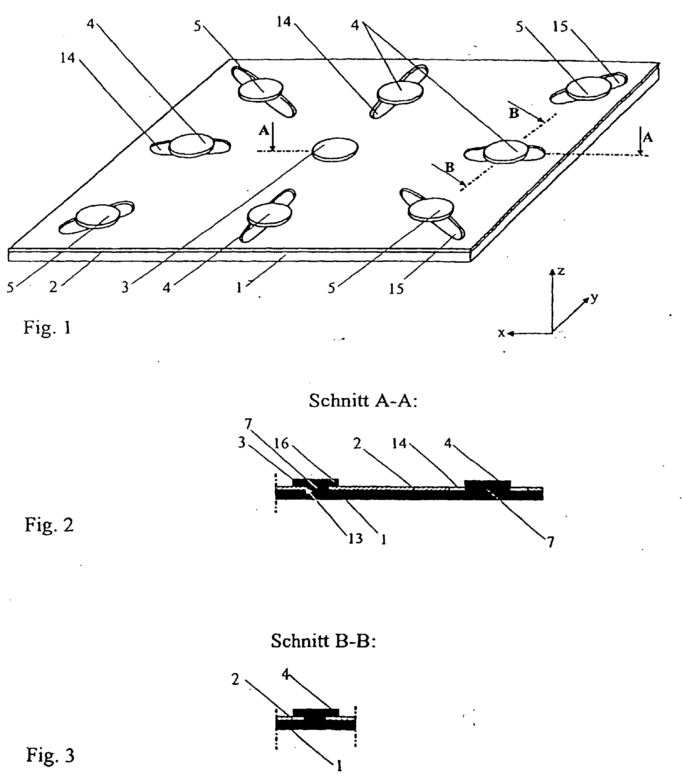

### Flächenverbund zwischen Kunststoffplatte und Metallblech: Fig. 1-3

### Beispiel 1

Fig. 1 zeigt eine Platte 1 aus einem thermoplastischen Kunststoff (Polyamid), die an verschiedenen Stellen mit formschlüssigen Verbindungselementen 3, 4, 5 an einem Metallblech 2 befestigt ist. Hierbei stellt das Verbindungselement 3 in der Mitte des Plattenverbundes eine fixierte Nietverbindung ohne Freiheitsgrade dar. Verbindungselement 4 befindet sich zwischen zwei Ecken am Rand des Plattenverbundes. Diese Nietverbindung weist durch das Langloch 14 im Metallblech 2 eine Ausdehnungsmöglichkeit je nach Lage in x- oder y-Richtung auf. Verbindungselement 5 befindet sich in einer Ecke des Plattenverbundes und ist durch die diagonale Ausrichtung des Langloches 15 im Metallblech 2 in der Platteneben in beiden Koordinatenrichtungen (in x- und y-Richtung) beweglich.

Das Bauteil kann auf unterschiedliche Weisen hergestellt werden. Wählt man die Möglichkeit die Kunststoffplatte 1 mittels Spritzgießen herzustellen, kann die Kunststoffplatte 1 direkt auf das Metallblech 2 aufgespritzt werden. Dabei werden dann gleichzeitig die Nietverbindungen 3, 4, 5 mit angeformt. Es ist darauf zu achten, dass die Verbindungselemente 4 und 5 in den entsprechenden Richtungen Aussparungen in Form der offenbleibenden Stellen der Langlöcher 14 und 15 aufweisen. Diese Aussparungen werden durch Kerne im Spritzgießwerkzeug realisiert, die in die Durchbrüche 14 und 15 des Metallbleches 2 hineinragen.

Weiterhin besteht die Möglichkeit zunächst die Kunststoffplatte 1 separat herzustellen, die dann anschließend mit dem Metallblech 2 verbunden wird. Wird die Kunststoffplatte 1 ebenfalls durch Spritzgießen hergestellt, werden Zapfen für Nietverbindungen 3, 4, 5 oder Schraubendome für Schraubenverbindungen direkt mit angeformt. Soll die Kunststoffplatte 1 aus einem Halbzeug entnommen werden, müssen die Verbindungselemente nachträglich durch Schweißen, Kleben, Schrauben, Metallnieten oder Clinchen angebracht werden. Die Verbindungselemente werden dann durch die Durchbrüche des Bleches gesteckt und mit dem entsprechenden Gegenstück des Verbindungselementes wird das Metallblech 2 auf die Kunststoffplatte 1 geklemmt.

Fig. 2 zeigt den Schnitt entsprechend Linie A-A von Fig. 1. Zu erkennen ist die Strecke zwischen Verbindungselement 3 aus der Mitte und Verbindungselement 4 aus dem Randbereich zwischen zwei Ecken der Verbundplatte von Fig. 1. Bei Verbindungselement 3 wird die kreisrunde Bohrung 13 in Metallblech 2 durch den Nietzapfen 7 vollständig ausgefüllt, so dass keine Relativbewegung zwischen Metallblech 2 und Kunststoffplatte 1 möglich ist. Dies ist in der Mitte einer punkt- symmetrischen Platte nicht erforderlich. In z-Richtung wird die Verbindungselement 3 durch Nietkopf 16 gesichert. Verbindungselement 4 erlaubt innerhalb des Langloches 14, das in das Metallblech 2 eingearbeitet ist, eine Bewegung des Nietzapfens 7 relativ zum Metallblech 2 in x-Richtung.

Fig. 3 zeigt den Schnitt entsprechend Linie B-B durch das Verbindungselement 4 auf der rechten Seite der Verbundplatte nach Fig. 1. Dargestellt ist der Schnitt durch Verbindungselement 4 quer zur Ausdehnungsrichtung, die in x-Richtung verläuft. Der Nietschaft 7 erzeugt in y-Richtung und Nietkopf 16 in z-Richtung einen Formschluss zwischen Metallblech 2 und Kunststoffplatte 1.

### Beispiel 2

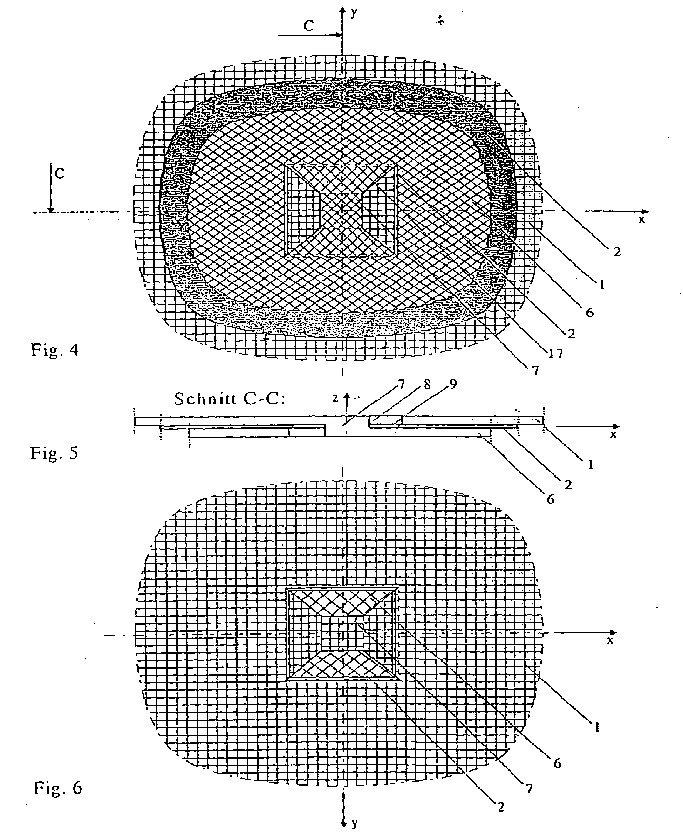

### Formschlüssiges Verbindungselement mit zwei Freiheitsgraden: Fig. 4-6

Die Figuren 4 bis 6 zeigen unterschiedliche Ansichten eines Verbindungselementes mit zwei Freiheitsgraden in der Flächenebene. In Fig. 4 ist die Draufsicht von unten wiedergegeben. Zu sehen ist der Ausschnitt einer Kunststoffplatte 1, die über das dargestellte Verbindungselement (Fig. 4-6) mit einem Ausschnitt der Kunststoffplatte 6 verbunden ist. Dazwischen ist ein Ausschnitt des Metallbleches 2 angeordnet. Die Anordnung von Kunststoffplatte 1, Metallblech 2 und Kunststoffplatte 6 ist darüber hinaus in Fig. 5 zu erkennen. Fig. 5 zeigt den Querschnitt des Verbindungselementes nach dem Schnittverlauf C-C, der in Fig. 4 aufgezeigt wird. Fig. 6 zeigt die Draufsicht von oben.

Die Verbindung der drei Komponenten Kunststoffplatten 1 und 6 sowie Metallblech 2 wird durch den Nietzapfen 7 erreicht, der sowohl mit Kunststoffplatte 1 als auch mit Kunststoffplatte 6 fest verbunden ist. Über die Aussparung 9, die als quadratischer Ringspalt mit rechteckigem Querschnitt ausgebildet ist, der durch die Anordnung vom Nietzapfen 7 und der quadratischen Aussparung 17 in Metallblech 2 gebildet wird, kann der Nietzapfen 7 in der Flächenebene sich relativ zu Metallblech 2 bewegen. Zur Herstellung der Aussparung 9 werden (aus fertigungstechnischen Gründen) Aussparungen 8 in den Kunststoffplatten 1 und 6 angebracht. Mit der Anordnung der Aussparungen 8 gemäß der Figuren 4 bis 6 wird der Tatsache Rechnung getragen, dass der Nietzapfen 7 fest mit den Kunststoffplatten 1 und 6 verbunden sein muss, um einen Formschluss in z-Richtung zu erhalten. Deshalb sind die Aussparungen 8 in x-Richtung in Kunststoffplatte 6 und in y-Richtung in Kunststoffplatte 1 eingearbeitet. Eine andere Anordnung (z.B. Aussparungen 8 in x-Richtung in Kunststoffplatte 1 und in y-Richtung in Kunststoffplatte 6, oder überlappende Aussparungen) ist ebenfalls denkbar.

### Beispiel 3

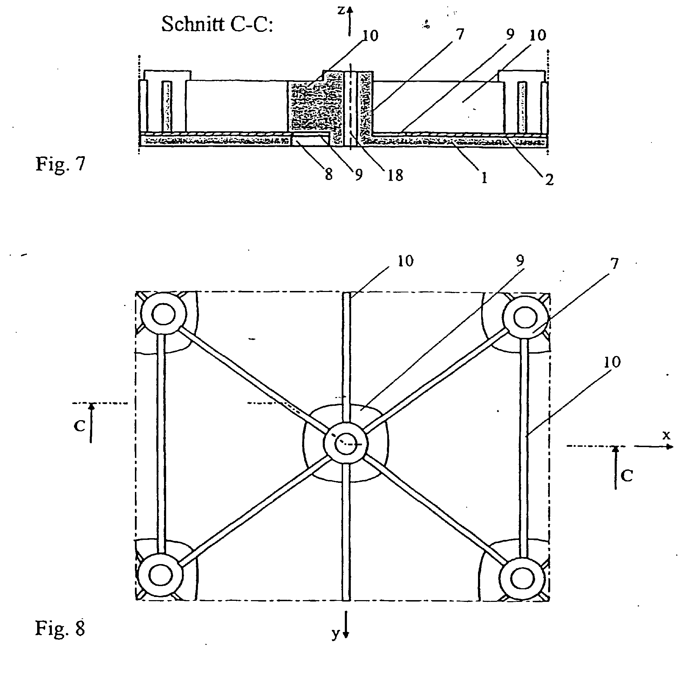

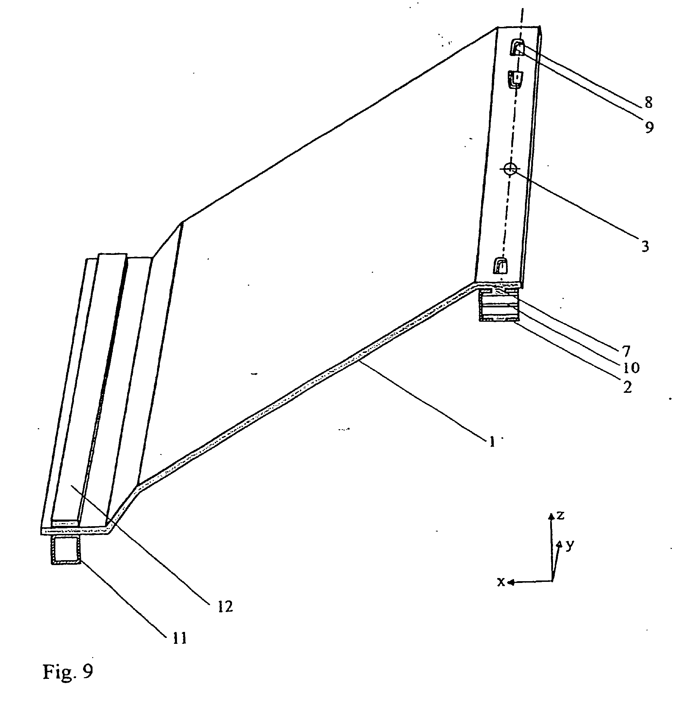

### Verbund aus Metallblech und Rippenstruktur aus Kunststoff mit Verbindungselementen mit zwei Freiheitsgraden: Fig. 7 und 8

Gezeigt wird ein Metallblech 2, das gemäß Fig. 7 auf der Unterseite mit einer Kunststoffplatte 1 bedeckt ist und auf der Oberseite durch eine Rippenstruktur 10 gestützt wird. Die Draufsicht des Verbundausschnittes von oben wird in Fig. 8 dargestellt.

Die Verbindung der drei Komponenten: die Kunststoffplatte 1, das Metallblech 2 und Rippenstruktur 10 aus thermoplastischem Kunststoff erfolgt über die Nietzapfen 7 mit zentraler Bohrung 18, die fest mit Kunststoffplatte 1 und Rippenstruktur 10 verbunden sind. Über die einzelnen Rippen 10 werden die Nietzapfen 7 miteinander verbunden und ein Formschluss in z-Richtung aufgebaut. Durch die Aussparung 9 kann der Nietzapfen 7 in der Flächenebene relativ zum Metallblech 2 bewegt werden. Unter den Rippen 10 wird der Bereich der Aussparung 9 über die Aussparungen 8 angebracht.

Die Herstellung des Verbundes erfolgt mit Hilfe eines Spritzgießprozesses. Dabei wird zunächst Metallblech 2 in ein Spritzgießwerkzeug eingelegt und anschließend die Thermoplastkomponente eingebracht, mit der die Kunststoffplatte 1, die Rippenstruktur 10 und Nietzapfen 7 geformt werden.

### Beispiel 4

### Spritzwand zwischen zwei Querträgern eines Kraftfahrzeuges: Fig. 9

Fig. 9 zeigt die Anordnung einer Kunststoffplatte 1 als Spritzwand zwischen den Querträgern 2 und 11. Der Querträger 2 besteht aus einem zu einem U-Profil geformten Stahlblech das durch eine Rippenstruktur 10 aus Thermoplast gestützt wird. Über Nietzapfen 7 wird die Rippenstruktur 10 mit der Kunststoffplatte 1 und dem Querträger 2 verbunden. Mit Hilfe der Aussparungen 9, die über die Aussparungen 8 angebracht werden, können die Nietzapfen 7 in Längsrichtung des Querträgers 2 (y-Richtung) relativ zum Metallblech des Querträgers 2 bewegt werden. Über das Verbindungselement 3, das in der Mitte des Querträgers 2 angeordnet ist, werden die Querträger 2, und die Kunststoffplatte 1 ohne Freiheitsgrad formschlüssig in allen drei Raumebenen verbunden. Temperaturbedingte Längenänderungen der Kunststoffplatte 1 in x-Richtung können durch die kraftschlüssige Einspannung der Kunststoffplatte 1 zwischen Querträger 11 und Lasche 12 ausgeglichen werden.

## Patentansprüche

1. Verbundbauteil wenigstens aufgebaut aus einem Grundkörper (2) bestehend aus einem hochfesten Werkstoff, insbesondere aus Metall oder einem faserverstärkten Thermoplasten oder einem Duromeren, insbesondere bevorzugt aus Metall, und einem an den Grundkörper angeformten Kunststoffteil (1) aus thermoplastischem Kunststoff, wobei der Grundkörper (2) an diskreten Verbindungsstellen (9; 13; 14; 15), insbesondere in Form von Durchbrüchen, Ausnehmungen, Senken oder Noppen, mit dem Kunststoffteil (1) verbunden ist, **dadurch gekennzeichnet, dass** an ausgewählten Durchbrüchen (9; 14; 15) das Kunststoffteil (1) durch die Durchbrüche (9; 14; 15) hindurchtritt, dass das Kunststoffteil (1) im Bereich der Durchbrüche (9; 14, 15) senkrecht zur Ebene des Grundkörpers (2) einen Formschluss mit dem Grundkörper (2) bildet, und dass das Kunststoffteil (1) in wenigstens einer Richtung x oder y in der Ebene des Grundkörpers (2) eine kraftschlüssige Verbindung zum Grundkörper (2) aufweist, die eine Relativbewegung zwischen Grundkörper (2) und Kunststoffteil (1) entlang der Richtungen x und/oder y zulässt.

2. Verbundbauteil nach Anspruch 1, **dadurch gekennzeichnet, dass** die Durchbrüche (9; 14; 15) als Langlöcher ausgebildet sind mit einer Hauptausdehnung entlang der Längsachse des Langloches.

3. Verbundbauteil nach Anspruch 1, **dadurch gekennzeichnet, dass** die Durchbrüche (9; 14; 15) in der Ebene des Grundkörpers (2) einen größeren Durchmesser in beiden Richtungen x und y aufweisen als der jeweilige Kunststoffzapfen (7) des Kunststoffteils (1), der durch einen Durchbruch (9; 14; 15) hindurchtritt.

4. Verbundbauteil nach einem der Ansprüche 1 bis 3, **dadurch gekennzeichnet, dass** das Kunststoffteil (1) eine Rippenstruktur (10) bildet, wobei die Verbindungsstellen (9; 13; 14; 15) des Kunststoffteils (1) überwiegend an den Kreuzungsstellen der Rippen (10) angeordnet sind.

5. Kunststoffverbundbauteil nach einem der Ansprüche 1 bis 4, **dadurch gekennzeichnet, dass** der thermoplastische Kunststoff ausgewählt ist aus der Reihe: Polyamid, Polyester, Polyolefin, Styrolcopolymerisat, Polycarbonat, Polyphenylenoxid, Polyphenylensulfid, Polyimid, PSO oder PEEK oder möglichen Mischungen der Polymere.

6. Verwendung des Verbundbauteiles nach einem der Ansprüche 1 bis 5 als Konstruktionselement für Maschinen und Fahrzeuge, insbesondere Kraftfahrzeuge, für Elektronikartikel, Haushaltsartikel oder Baubedarf.

## Claims

1. Composite structural part fabricated at least from a core body (2) consisting of a high-strength material, in particular of metal or a fibre-reinforced thermoplastic material or a thermosetting material, particularly preferably of metal, and a plastics part (1) of thermoplastic material formed on the core body, the said core body (2) being joined to the plastics part (1) at discrete joining sites (9; 13; 14; 15), in particular in the form of perforations, recesses, depressions or burls, **characterised in that** at selected perforations (9; 14; 15) the plastics part (1) penetrates the perforations (9; 14; 15), that the plastics part (1) in the region of the perforations (9; 14; 15) forms an interlocking engagement with the core body (2) perpendicular to the plane of the said core body (2), and that the plastics part (1) in at least the x or y direction in the plane of the core body (2) forms a frictional-type connection with the core body (2) that permits a relative movement between the core body (2) and plastics part (1) along the x and/or y directions.

2. Composite structural part according to claim 1, **characterised in that** the perforations (9; 14; 15) are formed as elongated holes having a principal expansion along the longitudinal axis of the elongated holes.

3. Composite structural part according to claim 1, **characterised in that** the perforations (9; 14; 15) in the plane of the core body (2) have a larger diameter in both the x and y directions than the respective plastics peg (7) of the plastics part (1) that penetrates a perforation (9; 14; 15).

4. Composite structural part according to one of claims 1 to 3, **characterised in that** the plastics part (1) forms a rib structure (10), the joining sites (9; 13; 14; 15) of the plastics part (1) being arranged predominantly at the points of intersection of the ribs (10).

5. Plastics composite structural part according to one of claims 1 to 4, **characterised in that** the thermoplastic material is selected from polyamide, polyester, polyolefin, styrene copolymer, polycarbonate, polyphenylene oxide, polyphenylene sulfide, polyimide, PSO or PEEK, or possible mixtures of the polymers.

6. Use of the composite part according to one of claims 1 to 5 as a construction element for machinery and vehicles, in particular motor vehicles, for electronics components, domestic appliances, or the building and construction sector.

## Revendications

1. Stratifié, élaboré au moins à partir d'un corps de base (2) consistant en un matériau très résistant, en particulier en métal ou en un thermoplastique renforcé par des fibres ou en un duromère, de préférence en un métal, et en une pièce en plastique (1) formée sur le corps de base, en un matériau thermoplastique, où le corps de base (2) est relié à la pièce en plastique (1) en des sites de liaison discrets (9 ; 13 ; 14 ; 15), en particulier sous la forme d'ajours, creux, dépressions ou nopes, **caractérisé en ce que** sur certains ajours (9; 14; 15), la pièce en plastique (1) traverse les ajours (9; 14; 15), **en ce que** la pièce en plastique (1) forme au niveau des ajours (9; 14 ; 15), perpendiculairement au plan du corps de base (2), une attache avec le corps de base (2), et **en ce que** la pièce plastique (1) présente en au moins une direction x ou y, dans le plan du corps de base (2), une liaison d'adhérence avec le corps de base (2), qui permet un mouvement relatif entre le corps de base (2) et la pièce plastique (1) le long des directions x et/ou y.

2. Stratifié selon la revendication 1, **caractérisé en ce que** les ajours (9 ; 14 ; 15) sont formés comme des trous longitudinaux avec une dilatation principale le long de l'axe longitudinal du trou longitudinal.

3. Stratifié selon la revendication 1, **caractérisé en ce que** les ajours (9 ; 14 ; 15) présentent dans le plan de corps de base (2), un diamètre plus grand dans les deux directions x et y, que chaque tenon en plastique (7) de la pièce en plastique (1), qui pénètre dans un ajour (9 ; 14 ; 15).

4. Stratifié selon l'une des revendications 1 à 3, **caractérisé en ce que** la pièce en plastique (1) forme une structure nervurée (10), où les sites de liaison (9 ; 13 ; 14 ; 15) de la pièce en plastique (1) sont disposés essentiellement sur les sites de croisement des nervures (10).

5. Stratifié selon l'une des revendications 1 à 4, **caractérisé en ce que** la matière thermoplastique est choisie parmi un polyamide, un polyester, une polyoléfine, un copolymère de styrène, un polycarbonate, un poly(oxyde de phénylène), un poly(sulfure de phénylène), un polyimide, un PSO ou un PEEC ou les mélanges possibles des polymères.

6. Utilisation du stratifié selon l'une des revendications 1 à 5, comme élément de construction pour machines et véhicules, en particulier véhicules automobiles, pour des articles électroniques, des articles ménagers ou des éléments de construction.
